# EUROPÄISCHE PATENTANMELDUNG

(11) **EP 1 609 667 A2**
(43) Veröffentlichungstag der Anmeldung: **28.12.2005**
(21) Anmeldenummer: 05012486.6
(22) Anmeldetag: 10.06.2005
(51) Int. Cl.: B60N 3/08, B60N 3/10, B60N 3/14, B60R 7/04, B60R 11/00

(54) **Mittelkonsole für ein Kraftfahrzeug**

(30) Priorität: 21.06.2004 DE 102004029864
(71) Anmelder: DaimlerChrysler AG, 70567 Stuttgart (DE)
(72) Erfinder: Herzog, Jürgen, 71691 Freiberg (DE); Nykiel, Thomas, 88094 Oberteuringen (DE)

(57) **Zusammenfassung**

Die Erfindung betrifft eine Mittelkonsole (1) für ein Kraftfahrzeug mit einem in diese einrastbaren Staufach (2), wobei das Staufach (2) ein Ablagefach (3) und in einem seitlich daneben angeordneten Bereich mit einem Funktionselement (4), insbesondere einem Zigarettenanzünder, einer Steckdose und/ oder einem Münzhalter, aufweist.

Um eine Mittelkonsole (1) für ein Kraftfahrzeug mit einem einrastbaren Staufach (2) zu schaffen, die auf konstruktiv einfache und kostengünstige Weise eine variable, platzsparende und benutzerfreundliche Nutzung ermöglicht, weist das Ablagefach (3) einen innerhalb diesem in Fahrzeuglängsrichtung verschiebbaren Einsatz (5) auf.

## Beschreibung

Die Erfindung betrifft eine Mittelkonsole für ein Kraftfahrzeug mit einem in diese einrastbaren Staufach. Das Staufach weist ein Ablagefach und einen seitlich daneben angeordneten Bereich mit einem Funktionselement, insbesondere einem Zigarettenanzünder, einer Steckdose und/oder einem Münzhalter auf.

Solche Mittelkonsolen sind allgemein bekannt.

So zeigt die DE 195 29 876 A1 ein Aufsatzteil für eine Mittelkonsole eines Kraftfahrzeugs. Das Aufsatzteil ermöglicht wahlweise ein oder mehrere Mittel zur Halterung von Gegenständen anzuordnen. So kann beispielsweise ein Ascher, eine Münzbox, ein Standplatz für Getränkebehältnisse, eine Ablagemöglichkeit für Audiokassetten oder Compact Discs und/oder eine Ablagemöglichkeit für eine Brille angeordnet werden.

Der Erfindung liegt die Aufgabe zu Grunde eine Mittelkonsole für ein Kraftfahrzeug mit einem einrastbaren Staufach zu schaffen, die auf konstruktiv einfache und kostengünstige Weise eine variable, platzsparende und benutzerfreundliche Nutzung ermöglicht.

Erfindungsgemäß wird diese Aufgabe durch eine Mittelkonsole mit den Merkmalen des Anspruchs 1 gelöst.

Eine Mittelkonsole für ein Kraftfahrzeug weist ein in diese einrastbares Staufach auf. Das Staufach weist ein Ablagefach und einen seitlich daneben angeordneten Bereich mit einem Funktionselement, insbesondere einem Zigarettenanzünder, einer Steckdose und/oder einem Münzhalter auf. Das Ablagefach weist einen innerhalb diesem in Fahrzeuglängsrichtung verschiebbaren Einsatz auf. Hierdurch werden durch die Verschiebbarkeit auf demselben Raum platzsparend verschiedene Funktionen, insbesondere Ascher, Ablage und Getränkebehälter, ermöglicht, die variabel und benutzerfreundlich genutzt werden können.

Das Staufach ist so angeordnet, dass der vordere Teil bis unter den Mitteldom reicht, so dass in der vorderen Position der Ascher verschlossen ist und keine Asche in einen Fahrzeuginnenraum gelangen kann und das optische Erscheinungsbild nicht gestört wird.

Von Vorteil ist wenn der Einsatz als Aschenbecher ausgebildet ist, da so in dem Fahrzeug fahrende Raucher den Einsatz zur Halterung von brennenden Zigaretten und/oder als Ascher nutzen können.

In einer Ausführung ist vorgesehen, dass das Ablagefach als Quader ausgebildet ist, der einen Boden und Seitenwände aufweist und oben offen ist. Die langen Seitenwände erstrecken sich in Fahrzeuglängsrichtung und die kurzen Seitenwände erstrecken sich in Fahrzeugquerrichtung. Der Einsatz ist ebenfalls quaderförmig ausgebildet und weist die gesamte Breite und etwa die halbe Länge des Ablagefaches auf. Dies hat den Vorteil, dass der Einsatz durch seine an das Ablagefach angepassten Abmessungen seitlich sicher und stabil geführt wird und gleichzeitig in Fahrzeuglängsrichtung verschiedene Positionen einnehmen kann.

Von Vorteil ist auch, wenn der in Fahrtrichtung hintere Teilbereich des Ablagefachs als Halter für Getränkebehälter ausgebildet ist, da so einfach und benutzerfreundlich Getränkebehälter in das Ablagefach eingestellt werden können.

Gemäß einer bevorzugten Weiterbildung, ist der Einsatz so in dem Ablagefach gelagert, dass in der hinteren Position des Einsatzes dieser aus dem Ablagefach entnehmbar ist. So kann der Einsatz einfach gereinigt und entleert werden.

Vorteilhaft ist ferner, dass die Seitenwand, die in der vorderen Position dem als Halter für Getränkebehälter ausgebildeten Teilbereich des Ablagefachs zugewandt ist, in Anlage mit einem in das Ablagefach eingestellten Getränkebehälter bringbar ist und diesen so sicher haltert. Hierdurch wird die sichere Halterung des Getränkebehälters verbessert, so dass dieser auch in Fahrsituationen, bei denen größere Beschleunigungskräfte auftreten, sicher gehaltert wird.

Es ist auch vorgesehen, dass das Staufach eine in diesem verschiebbar geführte Abdeckung aufweist, mit der das Staufach bei Nichtgebrauch komplett verschließbar ist. Hierdurch wird ein optisch ansprechender und aufgeräumter Eindruck der Mittelkonsole erreicht.

Das Ablagefach und das Funktionselement können auch so in dem Staufach angeordnet sein, dass eine Verschiebung in Fahrzeugquerrichtung möglich ist.

Weitere Vorteile und Einzelheiten der Erfindung sind in den Patentansprüchen und in der Beschreibung erläutert und in den Figuren dargestellt.

Dabei zeigen:
- Fig. 1: eine perspektivische Darstellung eines Staufachs,
- Fig. 2: einen Teilbereich einer Mittelkonsole mit eingesetztem Staufach und einem Einsatz in einer vorderen Position und
- Fig. 3: denselben Teilbereich der Mittelkonsole mit dem Einsatz in der hinteren Position.

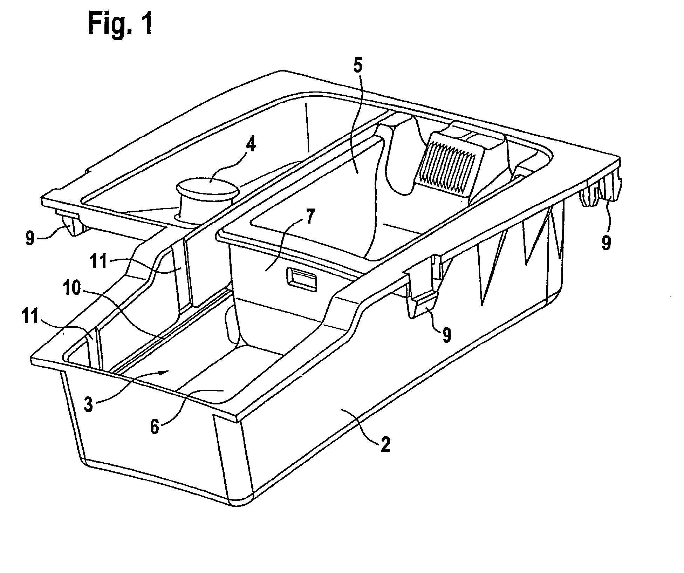

Figur 1 zeigt eine perspektivische Darstellung des Staufachs 2. Das Staufach weist ein Ablagefach 3 und einen seitlich daneben angeordneten Bereich mit einem Zigarettenanzünder 4 auf. Das Ablagefach 3 weist einen innerhalb diesem in Fahrzeuglängsrichtung verschiebbaren Einsatz 5 auf. In dem Ablagefach 3 sind im unteren Bereich der Seitenwände Führungen 10 angeordnet, in denen der Einsatz 5 geführt wird. Der Einsatz 5 ist in Figur 1 in einer vorderen Position dargestellt. Durch Verschieben des Einsatzes 5 entlang der Führungen 10 in eine hintere Position kann der Einsatz 5 über weitere Führungen 11 die senkrecht zu den Führungen 10 angeordnet sind aus dem Ablagefach entnommen werden. Hierdurch kann der Einsatz 5 besonders einfach entleert und gereinigt werden.

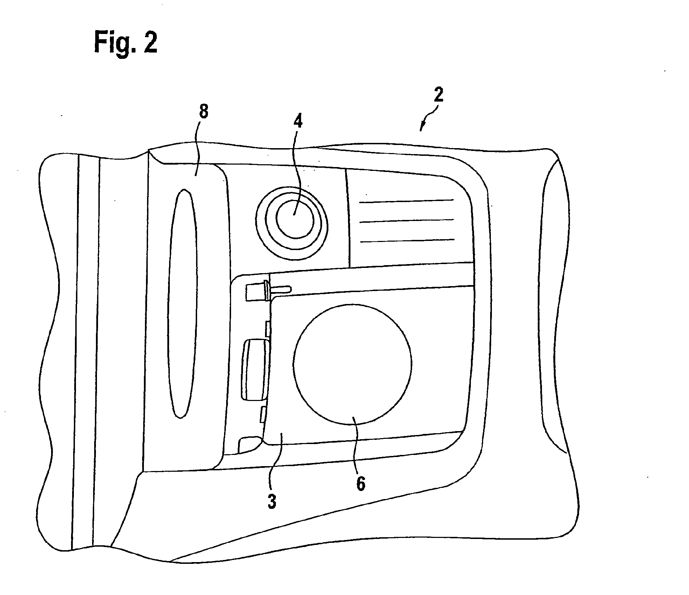

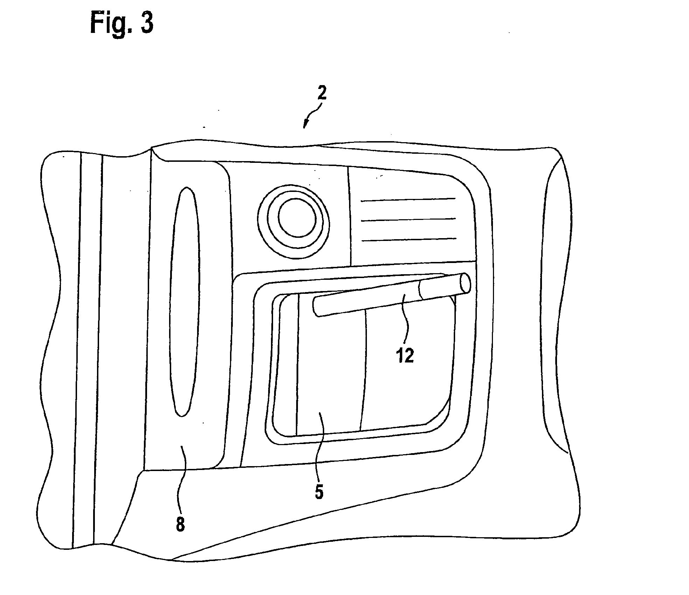

Seitlich an dem Staufach 2 sind Rasthacken 9 angeordnet über die das Staufach 2 sich in eine, in Figur 2 und 3 dargestellte, Mittelkonsole 1 eingerastet werden kann.

Figur 2 zeigt einen Teilbereich der Mittelkonsole 1 mit eingerastetem Staufach 2. Der Einsatz 5 befindet sich in dieser Darstellung in der vorderen Position. In dieser Position befindet sich der Einsatz 5 unterhalb des Mitteldoms und ist dadurch sicher verschlossen und es kann keine Asche in den Fahrzeuginnenraum gelangen und das optische Erscheinungsbild wird nicht negativ beeinträchtigt.

Der hintere Bereich des Ablagefachs 3 ist als Halter für Getränkebehälter 6 ausgebildet. Eine Seitenwand 7 des Einsatzes, die dem hinteren Teil des Ablagefachs 3 zugewandt ist, ist mit einem eingestellten Getränkebehälter in Kontakt bringbar und haltert diesen so sicher. Weiterhin weist das Staufach 2 eine Abdeckung 8 auf, die in dem Staufach 2 verschiebbar geführt ist und das Staufach 2 bei Nichtgebrauch komplett verschließen kann.

Figur 3 zeigt den selben Teilbereich der Mittelkonsole 1 wie Figur 2. Der Einsatz 5 befindet sich in Figur 3 in der hinteren Position. Der als Aschenbecher ausgebildete Einsatz 5 kann, wie dargestellt, als Ascher oder Ablagemöglichkeit für eine Zigarette 12 benutzt werden.

Bei geschlossener Abdeckung 8 ist der Ascher sicher verschlossen und es kann keine Asche in den Fahrzeuginnenraum gelangen und das optische Erscheinungsbild wird nicht negativ beeinträchtigt.

Durch die Verschiebbarkeit des Einsatzes 5 ist ein einfacher Wechsel zwischen der vorderen Position, wie sie in Figur 2 dargestellt ist und der hinteren Position wie sie in Figur 3 dargestellt ist, möglich. Es werden ohne zusätzlichen Platzbedarf mehrer Funktionen ermöglicht. Das Staufach ist so Platz sparend, bedienerfreundlich und flexibel einsetzbar.

## Patentansprüche

1. Mittelkonsole (1) für ein Kraftfahrzeug mit einem in diese einrastbaren Staufach (2), wobei das Staufach (2) ein Ablagefach (3) und in einem seitlich daneben angeordneten Bereich mit einem Funktionselement (4), insbesondere einem Zigarettenanzünder, einer Steckdose und / oder einem Münzhalter aufweist und das Ablagefach (3) einen innerhalb diesem in Fahrzeuglängsrichtung verschiebbaren Einsatz (5) aufweist,
**dadurch gekennzeichnet,**
**dass** in einer hinteren Position des Einsatzes (5), dieser als Aschenbecher nutzbar ist und in einer vorderen Position des Einsatzes (5) das Ablagefach (3) als Halter für Getränkebehälter (6) nutzbar ist.

2. Mittelkonsole für ein Kraftfahrzeug nach Anspruch 1,
**dadurch gekennzeichnet,**
**dass** das Ablagefach (3) als Quader ausgebildet ist, der einen Boden und Seitenwände aufweist und oben offen ist, wobei sich die langen Seitewände in Fahrzeuglängsrichtung und die kurzen Seitenwände sich in Fahrzeugquerrichtung erstrecken und der Einsatz ebenfalls im wesentlichen quaderförmig ist und die gesamte Breite und etwa die halbe Länge des Ablagefachs (3) aufweist.

3. Mittelkonsole für ein Kraftfahrzeug nach Anspruch 1 oder 2,
**dadurch gekennzeichnet,**
**dass** der in Fahrtrichtung hintere Teilbereich des Ablagefachs (3) als Halter für Getränkebehälter (6) ausgebildet ist.

4. Mittelkonsole für ein Kraftfahrzeug nach einem der vorhergehenden Ansprüche,
**dadurch gekennzeichnet,**
**dass** der Einsatz (5) so in dem Ablagefach (3) gelagert ist, dass in der hinteren Position des Einsatzes (5) dieser aus dem Ablagefach (3) entnehmbar ist.

5. Mittelkonsole für ein Kraftfahrzeug nach einem der vorhergehenden Ansprüche,
**dadurch gekennzeichnet,**
**dass** die Seitenwand, die in der vorderen Position dem als Halter für Getränkebehälter (6) ausgebildeten Teilbereich des Ablagefachs (3) zugewandt ist, in Anlage mit einem in das Ablagefach (3) eingestellten Getränkebehälter bringbar ist und diesen so sicher haltert.

6. Mittelkonsole für ein Kraftfahrzeug nach einem der vorhergehenden Ansprüche,
**dadurch gekennzeichnet,**
**dass** das Staufach (2) eine in diesem verschiebbar geführte Abdeckung (8) aufweist, mit der das Staufach (2) bei Nichtgebrauch komplett verschließbar ist.
